# EUROPEAN PATENT SPECIFICATION

(11) **EP 2 147 711 B1**
(45) Date of publication and mention of the grant of the patent: **10.10.2012**
(21) Application number: 09165696.7
(22) Date of filing: 16.07.2009
(51) Int. Cl.: B01D 24/46, C02F 3/06, C02F 1/52

(54) **Process for water purification using flocculation and biological filtration**
Wasseraufbereitungsverfahren mit Flockung und biologischer Filtration
Procédé de purification d'eau avec floculation et filtration biologique

(30) Priority: 24.07.2008 EP 08075658
(43) Date of publication of application: 27.01.2010
(73) Proprietor: Norit Nederland B.V., 3812 PM Amersfoort (NL); Witteveen & Bos Raadgevende Ingenieurs B.V., 7411 SC Deventer (NL)
(72) Inventor: Menkveld, Hendrik Willem Herman, 7251 SE Vorden (NL); van den Dikkenberg, Jan Cornelis, 3862 RB Nijkerk (NL)
(74) Representative: Hatzmann, Martin

(56) References cited:
- EP-A- 0 509 345
- WO-A-98/14259
- CA-C- 1 306 421
- GB-A- 2 388 557
- US-A- 2 217 689
- US-A- 3 401 114
- US-A- 4 859 330
- US-A- 5 078 873
- US-A- 5 256 299
- SISON N F ET AL: "DENITRIFICATION WITH EXTERNAL CARBON SOURCE UTILIZING ADSORPTION AND DESORPTION CAPABILITY OF ACTIVATED CARBON" WATER RESEARCH, ELSEVIER, AMSTERDAM, NL, vol. 30, no. 1, 1 January 1996 (1996-01-01), pages 217-227, XP000537840 ISSN: 0043-1354

## Description

The invention is directed to a process for the purification of waste water or surface water and to a system or unit suitable for that. More in particular the invention is directed to an integrated system comprising various unit operations in relation to water purification, which unit operations act in conjunction to provide improved effluent quality.

Purification of municipal waste water is very important, especially in view of the requirements on the quality of surface water in which the waste water, after purification is discharged.

Various systems for water purification are available, generally based on some kind of biological process. In these processes biomass (i.e. biological sludge) is used to convert the substances which have to be removed (COD (chemical oxygen demand), nitrogen compounds, and the like) to harmless compounds that can be discharged without environmental impact on the surface water. In view of the amounts of water to be purified, large installations are generally used, such as large filter basins containing sand, activated carbon or anthracite as filtering component and as support for the biomass. Other systems can be based on (optionally supported) biomass that is kept in suspension in large basins. Other components that may be present in the water may require other methods.

The present invention is in the area of water purification systems using large filter basins, more in particular for municipal waste water or surface water.

The present invention aims at a combined removal of suspended solids, total nitrogen, nitrate, total phosphate, (heavy) metal compounds and dissolved organic micro-pollutants in one operation. At the same time, the system intends to operate at highly differing hydraulic loads, while the effluent meets the requirements of the 5^{th} Water Framework Directive (EWFD). The goal of this directive is to ensure that the quality of the surface water and groundwater in Europe reaches a high standard by the year 2015.

Municipal wastewater is typically pretreated by settling, biological treatment and final clarification. A range of impurities is effectively removed by these treatment steps. Still, the final effluent contains after final clarification a number of residual impurities in a concentration range which varies from one case to another. Surface water contains also a number of residual impurities which have to be removed before the surface water can be used as source for drinking water or boiler feed water. In the table below typical contaminants and their concentration ranges have been given.

| **Parameter** | **Typical concentration in municipal wastewater (*) or surface water (mg/l)** | **Main components** |
|---|---|---|
| COD | 5-60 | Humic compounds, natural organic matter (NOM) |
| Suspended solids | 2-50 | Micro-flocs, biomass |
| Total Nitrogen | 1-20 | Nitrate |
| Total Phosphorus | 0,1-2,5 | Ortho-phosphate |
| Heavy metals | 0,001-0,1 | Cu, Zn, Sn |
| Sum of total Organic micro pollutants | 0,001-0,1 | Phthalates, PAH, pesticide residuals, estrogenic components, medicines |

| | | |
|---|---|---|
| **(*) after biological treatment and clarification** | | |

Generally in wastewater and surface water treatment, a number of treatment steps can be applied on a stand-alone basis:
- Coagulation/flocculation, followed by floc removal: Fe or Al salts are used as coagulant / flocculant. In this way suspended solids, ortho-phosphate and some of the heavy metals and organic micro pollutants are removed
- Biological treatment: in particular denitrification entails the biological reduction of nitrate into N₂ gas
- Mechanical filtration: a commonly applied technique to remove suspended solids
- Adsorption on the surface of activated carbon: especially hydrophobic, dissolved organic impurities are effectively removed by physical adsorption onto activated carbon

Examples of treatment processes combining two or more of the above steps are described in US 5 256 299 or GB 2 388 557.

There is a need for an improved waste water purification process, which is rather insensitive to fluctuations in the load, both in terms of amount of water to be treated and in concentration of contaminants, whereas it is a further requirement that the filter can easily be cleaned without having to interrupt the purification process.

On the one hand, the present invention is based on the combined use of coagulation/flocculation, mechanical filtration, bio-treatment and adsorption in a bed containing only granular activated carbon (GAC) and on the other hand on the cleaning of the surface of the bed of granular activated carbon. This process is applied to either surface water or suitably pre-treated waste water. This pre-treatment generally comprises a biological and/or chemical pre-treatment.

In this process, feed water such as pre-treated wastewater or surface water is first treated with a suitable flocculating agent. Further a carbon source, such as methanol or acetic acid, is dosed to the feed water.

Subsequently the feed water is fed to an activated carbon bed, whereby the water is fed in downward flow through a filtration basin, having only activated carbon as filter medium. The activated carbon acts as a support for the biomass.

The GAC has granules with a particle size preferably between 0.6 and 5 mm (i.e. 90 wt.% of the particles is within this range). This is the size range where optimal purification results are obtained. Optionally the bed may consist of more than one layer of GAC, having different particle sizes.

The GAC filter bed combines 3 functionalities, namely mechanical filtration to remove suspended solids, biological degradation (removal) of organic compounds and nitrate and physical adsorption of dissolved organics.

Accordingly the process of the invention allows for a one step removal of all relevant impurities, as indicated above, resulting in an effluent that meets the criteria for discharge into surface water.

The three functionalities which are combined in the system are explained in more detail below.

### a. Mechanical filtration

The flocculated materials, which accumulate in the filter bed, has to be removed regularly. This is done by backwashing in up flow, typically on a daily basis. The accumulated sludge and flocculated materials are separated from the GAC layer, and is collected with the backwash water.

However, sometimes the filter bed can get clogged and cannot be cleaned by conventional backwashing. It has now been found that in such circumstances only the surface layer of the bed has to be removed. A GAC washing facility can be provided for this purpose.

### b. Biological filtration

Due to the biological degradation of nitrate and organic compounds by the biomass present in the GAC bed, new biomass is formed which will accumulate on and between the GAC. This biomass is partly removed by backwashing in up flow, typically on a daily basis. The accumulated biological sludge is separated from the GAC layer in the same way as the accumulated "particles" are removed (see above).

### c. Adsorption

Once the GAC adsorption sites are saturated, the GAC shall be removed from the filter vessel, and be regenerated by an off-site thermal reactivation.

Following this regeneration the GAC can be used in its original application. A suitable way for handling the GAC - i.e. filling and emptying the filter vessel - is by means of a dedicated unit. Such a unit comprises a bridge which is adapted to move over the surface in one direction. This bridge is provided with a tube connected on one side to a suction device which can be moved up and down depending on the location of the surface of the filer. The other side is connected to a separation unit for sludge and activated carbon. The suction device can move along the length of the bridge in a direction perpendicular to the direction of the bridge. The suction device can be a submersed pump or just a tube connected to a pump on the bridge or in the neighbourhood of the filtration basin.

The material that is removed from the bed can advantageously be transferred to a sludge / GAC separation unit. The separated carbon can be returned to the bed, or can be regenerated. The sludge can be returned to the main waste water treatment plant.

During operation the filter bed is regular backwashed to remove excess solids and excess biomass. The backwash takes place once the pressure drop over the bed exceeds a predetermined value. The backwash comprises a reverse liquid flow, whereby a number (for example 2 to 5) of bed volumes of treated water is used as backwash water. The used backwash water is collected in a buffer before it is routed to the main waste water treatment plant. A backwash takes place in general every 12 to 24 hours, depending on the load of impurities of the water to be treated. The flow rate applied for backwashing is such, that biomass and other solids are removed form the bed.

It has now been found that it is useful to include an additional wash procedure in the process, mainly to remove the nitrogen gas in the filter bed that is formed during denitrification. This additional backwash step is introduced to prevent the filter from blocking by nitrogen gas bubbles. It has been found that including this backwash step substantially increases the time between two regular backwash steps, up to a factor four. This removal step may comprise a reverse flow of water of about 1 bed volume (between 0.75 and 1.25), using a relative low flow rate. Alternative the bed can be flushed with air or the bed can be subjected to mechanical treatment, which will loosen the gas bubbles from the GAC and agglomerate.

This invention is a process which consists of various aspects, which work together to get a surprisingly good purification result, in only a one-step process.

Surprisingly, this process results in a thorough and reliable purification of waste water or surface water. The water can be purified in such a way that the filtrate quality almost always meets the criteria from the EWFD.

In addition the process of the present invention allows the reuse of process effluent or filtrate for various applications. Depending on the actual operating conditions it is possible to produce a filtrate that can be considered as precursor for industrial water. It is also possible to process the filtrate without much further treatment into demi-water, or even boiler feed water for steam production.

As indicated above, the filter bed consists of GAC only. This is present in a basin, and can optionally be supported on a grit and/or a layer of supporting material, such as coal, gravel or any other suitable support for a GAC filter bed.

Typical design data for a filter in accordance with the present invention are a filter with a filtration rate of 5 to 20 m/h and a width and length which may range from 10 to 15 m each. Generally the amount of carbon per filter is between 20 and 150 m³.

According to a preferred embodiment of the invention, the system for removing the surface layer by suction is also suitable for the initial filling and for the emptying of the filter or filter basin. This device preferably comprises a bridge which is adapted to move over the surface of the filter in one direction. The bridge is provided with a tube connected at one side to a suction device which can be moved up and down in dependence of the location of the surface of the filter. This device can move along the length of the bridge in a direction perpendicular to the direction of the bridge. At the other side it is connected to a unit to separate the sludge from the activated carbon. The suction device is connected to a pump for pumping a slurry from the filter to the separation unit or other device for storing the sludge. Such a pump typically has a capacity of 50 to 75 m³/h and is able to pump carbon slurries having a concentration of 5 to 50 % of carbon by volume.

The invention further provides for a wastewater and surface water purification system suitable for use in the process of the present invention, comprising means for feeding flocculation agent and carbon source to a wastewater or surface water flow, a filter basin containing substantially only GAC as the filter material, down stream of the said means for feeding flocculation agent, means for feeding the wastewater or surface water flow to the filter basin for downflow filtration, said filter basin being provided with a bridge which is adapted to move over the surface of the basin in one direction, which bridge is provided with a tube connected at a first end to a suction device which can be moved up and down in dependence of the location of the surface of the filer, and at the second end with a connection to a separation unit for sludge and GAC, whereas the first end can move along the length of the bridge in a direction perpendicular to the direction of the bridge.

More specifically, the water purification comprises a flocculation agent feeding system (complete with advanced dosing control) to the waste water or surface water flow feed flow, a COD-source feeding system to the wastewater or surface water flow, a filter basin containing substantially only GAC as the filter material, a backwash system for backwashing with air and filtrate,a feed / removal / washing system for the GAC downstream of the said means for feeding flocculation agent, means for feeding the wastewater or surface water flow to the filter basin for downflow filtration, provided with one or more layers of activated carbon filter material, means for feeding the wastewater or surface water flow to the filter basin, said filter basin being provided with a bridge which is adapted to move over the surface of the basin in one direction, which bridge is provided with a tube connected at a first end to a suction device which can be moved up and down in dependence of the location of the surface of the filer, and at the second end with a connection to a separation unit for sludge and GAC, whereas the first end can move along the length of the bridge in a direction perpendicular to the direction of the bridge.

### Short description of the figures

Fig 1 shows a preferred embodiment of the 1-STEP® filter according to the invention;
Fig 2 shows a cross-section of a filter basin 9;
Fig 3 shows the phosphate removal according to the invention;
Fig. 4 shows the nitrate removal according to the invention and;
Fig. 5 shows the organic micro pollutant removal according to the invention.

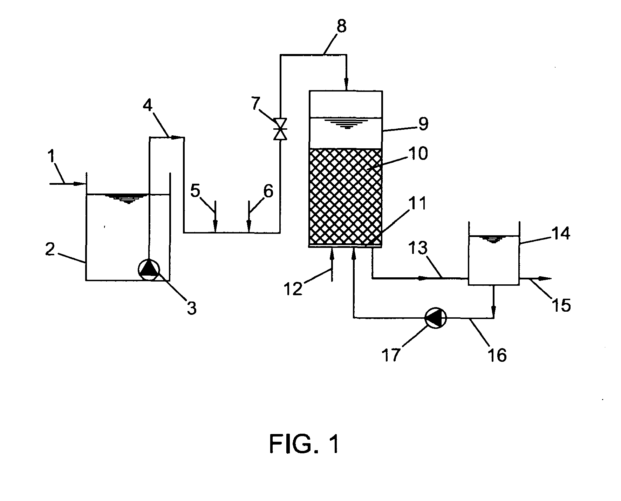

In figure 1, a flow diagram of a preferred embodiment of the process of the invention (1-STEP® filter) has been given.

Via line 1 water to be purified is fed to a first buffer vessel 2 from which it is pumped by pump 3 and line 4. Via lines 5 and 6 coagulant and carbon source are fed into the waste water. The water is then passed though static mixer 7 and from there via line 8 into filter 9. This filter is provided with a carbon filter bed 10 on top of a supporting grid 11, which may for example be anthracite, sand or gravel.

The filtrate is removed via line 13 into a second buffer veseel 14. The treated water is discharged or further processing via line 15. Part of the filtrate is used as back wash water, which will be pumped to the filters via line 16 and pump 17. Beside filtrate, air can be used for back washing (line 12).

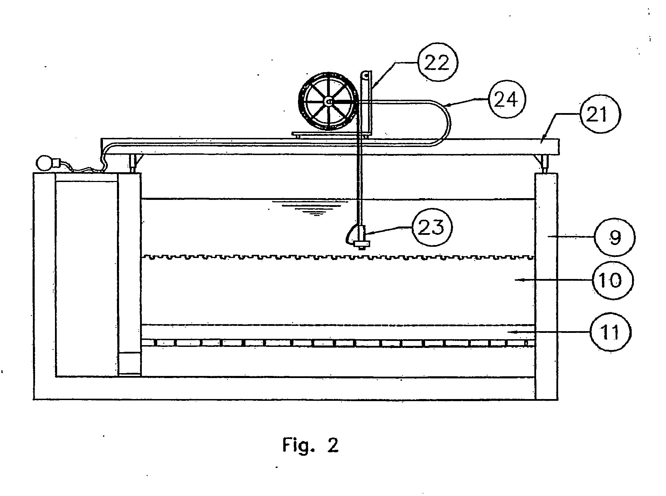

In figure 2 a cross-section is given of filter basin 9. The filter basin is provided with means for filling and emptying the filter basin, as well as for removing the surface layer from the filter.

In this figure the filter basin 9 is provided with a bridge 21, which can be moved over the edge of the basin. The bridge is provided with a moving suction device 22, having a pending suction head 23, which is located near the surface of the filter bed (or a suction pump). This device can move along the length of the bridge. As the bridge can move perpendicular to the movement of the device, it is possible to reach the entire surface of the bed with the suction head. In this way the entire surface can be cleaned, using this device.

The sludge taken up by the suction head 23 is passed via line 24 to the outside of the filter basin, where it can be further processed, as discussed above.

### Example

At a waste water treatment plant, treated water is fed to a pilot installation of the invention in an amount of 10 - 20 m³/h.

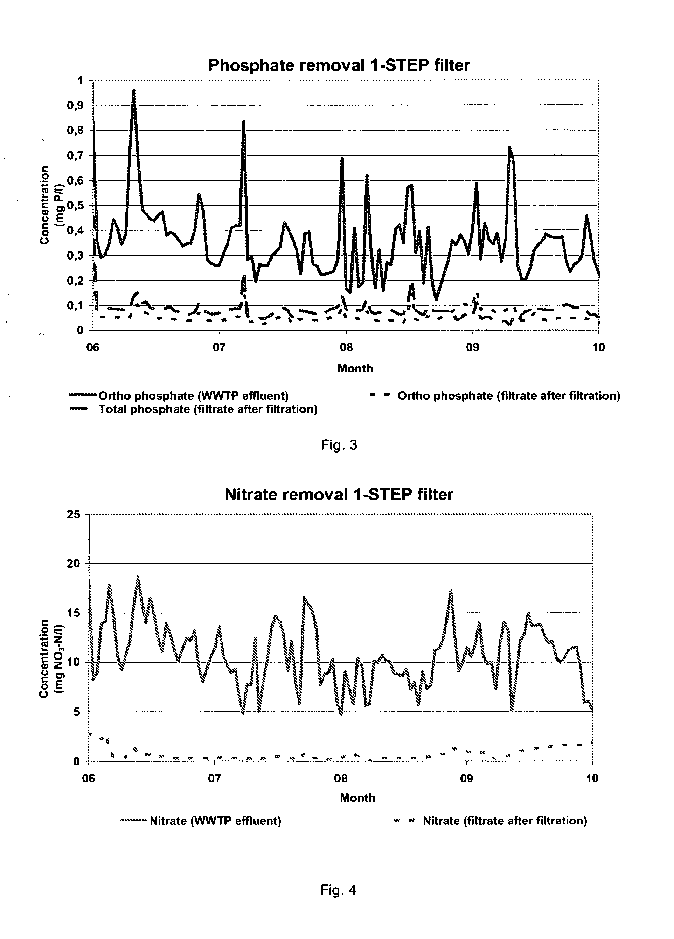

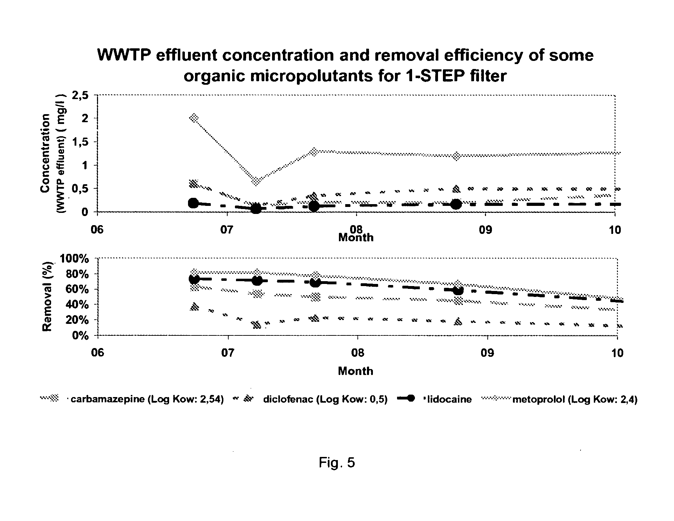

The waste water, that was pre-treated by a conventional biological purification system. Flocculant and carbon source were added to the waste water via lines 5 and 6 (located after the static mixer) and the mixture was passed into filter 9. The water passes the filter in a down flow direction. In the filter basin (9), the water is filtered and purified. The characteristics of the removal of various impurities, namely phosphate, nitrate and some micro pollutants are given in the figures 3, 4 and 5.

## Claims

1. Process for purifying pre-treated wastewater and surface water, which process comprises adding a flocculating agent and a carbon source to the said wastewater or surface water and subsequently feeding the wastewater or surface water to a biological filter, whereby the water is fed in downward flow through a filtration basin, having only granular activated carbon (GAC) as the filter medium, which filter is further provided with a system for removing a surface layer of the filter by suction, wherein a surface layer of the filter is removed by use of said system, and in which process:
- the filter bed is backwashed to remove biomass and other solids by an upflow stream of filtrate, and
- nitrogen gas is removed from the bed by a reverse flow of water in an amount of between 0.75 and 1.25 bed volumes or by flushing the bed with air or subjecting the bed to mechanical treatment.

2. Process according to claim 1, wherein the surface layer of the GAC is removed by use of said system and the removed material, at least comprising sludge and GAC, is separated into a sludge containing fraction and GAC containing fraction.

3. Process according to claim 1-2, wherein the said GAC has a particle size in the range of 0.6 to 5 mm.

4. Process according to claim 1-3, where the filter bed is backwashed by an upflow stream of filtrate in an amount of 2 to 5 bed volumes, and/or air.

5. Process according to claim 1-4, where the said system comprises a bridge which is adapted to move over the surface in one direction, which bridge is provided with a tube connected at a first end to a suction device which can be moved up and down in dependence of the location of the surface of the filter, and at the second end with a connection to a separation unit for sludge and activated carbon, whereas the first end can move along the length of the bridge in a direction perpendicular to the direction of the bridge.

## Patentansprüche

1. Verfahren zur Aufbereitung von vorbehandeltem Abwasser und Oberflächenwasser, umfassend das Hinzufügen eines Flockungsmittels und einer Kohlenstoffquelle zu dem Abwasser oder Oberflächenwasser und anschließendes Zuführen des Abwassers oder Oberflächenwassers zu einem biologischen Filter, wobei das Wasser in einem Abwärtsfluss durch ein Filtrationsbecken geführt wird, das nur granulären aktivierten Kohlenstoff (GAC) als Filtermaterial aufweist, welcher Filter ferner mit einem System versehen ist, um eine Oberflächenschicht des Filters durch Saugen zu entfernen, wobei die Oberflächenschicht des Filters durch die Verwendung des Systems entfernt wird und in welchem Verfahren:
- das Filterbett rückgespült wird, um Biomasse und andere Festkörper durch einen Aufwärtsfluss von Filtrat zu entfernen, und
- Stickstoffgas durch einen Umkehrfluss von Wasser in einer Menge zwischen 0,75 und 1,25 Bettvolumen oder durch Spülen des Betts mit Luft oder indem das Bett einer mechanischen Behandlung unterzogen wird, aus dem Bett entfernt wird.

2. Verfahren nach Anspruch 1, wobei die Oberflächenschicht des GAC durch Verwendung des Systems entfernt wird und das entfernte Material, das mindestens Schlamm und GAC umfasst, in einen Schlamm enthaltenden Teil und einen GAC enthaltenden Teil getrennt wird.

3. Verfahren nach Anspruch 1-2, wobei der GAC eine Partikelgröße im Bereich von 0,6 bis 5 mm aufweist.

4. Verfahren nach Anspruch 1-3, wobei das Filterbett durch einen Aufwärtsfluss von Filtrat in einer Menge von 2 bis 5 Bettvolumen und/oder Luft rückgespült wird.

5. Verfahren nach Anspruch 1-4, wobei das System eine Brücke umfasst, die angepasst ist, sich in einer Richtung über die Oberfläche zu bewegen, welche Brücke versehen ist mit einem Rohr, verbunden mit einem ersten Ende mit einer Saugvorrichtung, die je nach der Position der Oberfläche des Filters auf und ab bewegt werden kann, und am zweiten Ende mit einer Verbindung zu einer Trenneinheit für Schlamm und aktivierten Kohlenstoff, während das erste Ende sich entlang der Länge der Brücke in einer Richtung senkrecht zur Richtung der Brücke bewegen kann.

## Revendications

1. Procédé pour purifier des eaux usées et des eaux de surfaces prétraitées, lequel procédé comprend l'addition d'un agent floculant et d'une source de carbone auxdites eaux usées ou eaux de surface et ensuite l'introduction des eaux usées ou eaux de surface dans un filtre biologique, de façon que l'eau soit introduite en écoulement descendant à travers un bassin de filtration, ayant seulement du charbon activé granulaire (GAC) en tant que milieu filtrant, lequel filtre étant en outre doté d'un système pour retirer une couche de surface du filtre par aspiration, la couche de surface du filtre étant retirée par utilisation dudit système, procédé dans lequel :
- le lit filtrant est lavé à contre-courant pour que la biomasse et d'autres solides soient éliminées par un courant ascendant de filtrat, et
- l'azote gazeux est éliminé du lit par un écoulement inverse d'eau en une quantité comprise entre 0,75 et 1,25 volumes de lit ou par rinçage du lit avec de l'air ou par l'opération consistant à soumettre le lit à un traitement mécanique.

2. Procédé selon la revendication 1, dans lequel la couche de surface du GAC est retirée par utilisation dudit système et le matériau retiré, comprenant au moins de la boue et du GAC, est séparé en une fraction contenant de la boue et une fraction contenant du GAC.

3. Procédé selon la revendication 1 ou 2, dans lequel ledit GAC a une granulométrie située dans la plage allant de 0,6 à 5 mm.

4. Procédé selon les revendications 1 à 3, dans lequel le lit filtrant est lavé à contre-courant par un courant ascendant de filtrat en une quantité de 2 à 5 volumes de lit, et/ou de l'air.

5. Procédé selon les revendications 1 à 4, dans lequel ledit système comprend un pont qui est adapté pour se déplacer au-dessus de la surface dans une direction, lequel pont étant doté d'un tube connecté à une première extrémité à un dispositif d'aspiration qui peut être déplacé vers le haut et le bas en fonction de l'emplacement de la surface du filtre, et à la deuxième extrémité avec une connexion à une unité de séparation pour la boue et le charbon activé, tandis que la première extrémité peut se déplacer le long de la longueur du pont dans une direction perpendiculaire à la direction du pont.
